# EUROPEAN PATENT APPLICATION

(11) **EP 4 484 666 A1**
(43) Date of publication of application: **01.01.2025**
(21) Application number: 23306045.8
(22) Date of filing: 28.06.2023
(51) Int. Cl.: E04C 2/04, E04C 2/52

(54) **PLASTERBOARDS AND METHODS FOR MAKING THE SAME**

(71) Applicant: Certainteed Gypsum, Inc., Malvern, PA 19355 (US)
(72) Inventor: LESPIAT, Remi, Malvern, 19355 (US); SALLES, Corinne, 84300 Cavaillon (FR); FISHER, Robin, Loughborough, LE12 6JS (GB); LIENHART, Fabien, 92400 Courbevoie (FR)
(74) Representative: Murgitroyd & Company

(57) **Abstract**

The present disclosure relates generally to a plasterboard having a first surface and an opposed second surface, the plasterboard comprising: a body of hardened plaster material extending from the first surface of the plasterboard to the second surface of the plasterboard; a first liner having a mass loss of at least 70 g/m² at 600 °C disposed at the first surface of the plasterboard; and a second liner having a mass loss of no more than 60 g/m² at 600 °C disposed at the second surface of the plasterboard.

## Description

### BACKGROUND OF THE DISCLOSURE

### 1. Field

The present disclosure relates generally to plaster boards and methods of making the same.

### 2. Technical Background

Plaster building products (e.g., known variously as wallboard, ceiling board, plasterboard and "drywall") are panels made of a plaster core sandwiched between two layers of liner, often paper, on the outside surfaces of the plaster core. They are widely used as construction materials due to their ease of fabrication, high mechanical strength, low thermal conductivity, resistance to spread of fire, and soundproofing properties. The quality of a plasterboard is strongly dependent on its core, which is fabricated by the hydration of slurry (including calcium sulfate hemihydrate, lime, or cements) into a set body. To control the properties of plasterboards, additives are often added to the slurry during the board making process. For example, foaming agents, inorganic compounds, and other additives may be included in the slurry to modulate the density, strength, and/or fire-resistance properties of the board.

To provide fire-resistant plasterboards, it has been common to incorporate fire-resistant additives, such as polymethylhydrosiloxane, to the plaster slurry during the board making process to ultimately improve the fire-resistance properties of the board. By including fire-resistant additives, the plasterboards have reduced board shrinkage at elevated temperatures, indicative of improved structural integrity.

However, additional improvements in fire resistance are desirable.

### SUMMARY

In one aspect, the present disclosure provides a plasterboard having a first surface and an opposed second surface, the plasterboard comprising:
a body of hardened plaster material extending from the first surface of the plasterboard to the second surface of the plasterboard;
a first liner having a mass loss of at least 70 g/m² (e.g., at least 100 g/cm², or at least 115 g/cm²) at 600 °C disposed at the first surface of the plasterboard; and
a second liner having a mass loss of no more than of no more than 60 g/m² at 600 °C disposed at the second surface of the plasterboard.

In another aspect, the present disclosure provides a plasterboard having a first surface and an opposed second surface, the plasterboard comprising:
a body of hardened plaster material extending from the first surface of the plasterboard to the second surface of the plasterboard;
a first liner disposed at the first surface of the plasterboard, the first paper liner having a heat release of at least 600 kJ/m² (e.g., at least 1000 kJ/m², or at least 1150 kJ/m²) and
a second liner disposed at the second surface of the plasterboard, the second liner having a heat release of no more than 500 kJ/m².

In another aspect, the present disclosure provides a plasterboard having a first surface and an opposed second surface, the plasterboard comprising:
a body of hardened plaster material extending from the first surface of the plasterboard to the second surface of the plasterboard;
a first liner that is a paper liner disposed at the first surface of the plasterboard; and
a second liner disposed at the second surface of the plasterboard, the second liner being a glass mat (i.e., optionally coated) comprising glass fibers bound by one or more polymer binders.

In various embodiments, the second liner has a heat release of no more than 500 kJ/m². In various embodiments, the second liner has a mass loss of no more than 60 g/m² at 600 °C.

In another aspect, the present disclosure provides a plasterboard having a first surface and an opposed second surface, the plasterboard comprising:
a body of hardened plaster material extending from the first surface of the plasterboard to the second surface of the plasterboard;
a first liner having a surface roughness (Rz) of no more than 40 microns disposed at the first surface of the plasterboard; and
a second liner disposed at the second surface of the plasterboard, the second liner having a mass loss of no more than of no more than 60 g/m² at 600 °C and/or a heat release of no more than 400 kJ/m².

In another aspect, the present disclosure provides a plasterboard having a first surface and an opposed second surface, the plasterboard comprising:
a body of hardened plaster material extending from the first surface of the plasterboard to the second surface of the plasterboard;
a first liner having a surface roughness (Rz) of no more than 40 microns disposed on the first surface of the plasterboard; and
a second liner having a surface roughness (Rz) of at least 80 microns disposed on the second surface of the plasterboard.

In another aspect, the present disclosure provides a method of forming a plasterboard as described herein, having a first surface and an opposed second surface, the method comprising:
providing a slurry comprising a plaster material and water;
disposing the slurry between a first liner and a second liner;
allowing the slurry to set to form a wet plaster core; and
drying the wet plaster core at a temperature in the range of 50-350 °C to provide the hardened plaster material;
wherein the hardened plaster material is disposed between a first liner at the first surface of the building board and a second liner at the second surface of the building board.

In another aspect, the present disclosure provides a building comprising an interior space that is bounded by a plasterboard as described herein, wherein the first liner faces toward the interior space and the second liner faces away from the interior space.

In another aspect, the present disclosure provides a wall cavity comprising a cavity space and one or more framing members, wherein the cavity space is bounded by a plasterboard as described herein, wherein the first liner faces away from the cavity space and the second liner faces towards the cavity space, and wherein the plasterboard is attached to the one or more framing members with the second liner facing towards the framing members and the first liner facing away from one or more framing members.

### BRIEF DESCRIPTION OF THE DRAWINGS

The accompanying drawings are included to provide a further understanding of the methods of the disclosure, and are incorporated in and constitute a part of this specification. The drawings are not necessarily to scale, and sizes of various elements may be distorted for clarity. The drawings illustrate one or more embodiment(s) of the disclosure and together with the description serve to explain the principles and operation of the disclosure.

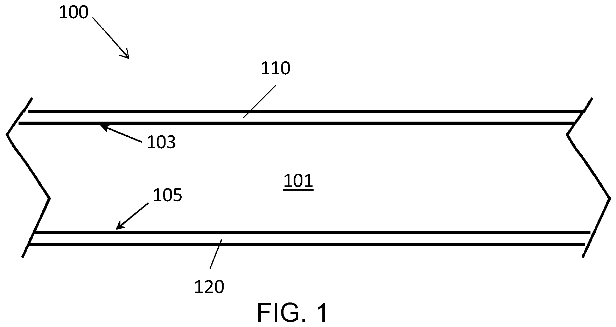

FIG. 1 is an illustration of a fire-resistant board as described herein.
FIG. 2A is a graph of the free shrinkage test results of liners as described herein.
FIG. 2B is a graph of the free shrinkage test results of liners as described herein.
FIG. 3 is a schematic of the small-scale partition test as described herein.
FIG. 4A is a graph of the thermal gravimetric analysis results of liners as described herein.
FIG. 4B is a graph of the thermal gravimetric analysis results of liners as described herein.
FIG. 4C is a graph of the mass loss vs. the partition test results of liners as described herein.
FIG. 5A is a graph of the differential scanning calorimetry results of liners as described herein.
FIG. 5B is a graph of the heat release and mass loss vs. partition test results of liners as described herein.
FIG. 6 is a graph comparing partition tests for boards made with various combinations of liners.

### DETAILED DESCRIPTION

The present disclosure is concerned with the provision of plasterboards having good fire resistance. The present inventors have noted that while the core materials, such as gypsum, used in plasterboard manufacture can provide the core with fire-resistant properties, the liners disposed at the outside surfaces of the core often do not exhibit good fire resistance. The present inventors have noted that while the liners are the first defense against fire for the board, they are commonly made from highly combustible materials.

In particular, conventional fire-resistant boards include two liners disposed at the outside surfaces of the board. The inventors note that paper liners can be highly desirable from the standpoint of providing a relatively smooth surface, e.g., for painting or other modification, and thus can provide good aesthetics to a surface facing a room.

As discussed above, conventional plasterboards are made of a plaster core sandwiched between two liners at the outside surfaces of the plaster core. When used to construct walls, the liner of the plasterboard that faces (and closes) the wall cavity is often referred to as the back liner (e.g., back paper), while the opposing side is often referred to as the face liner (e.g., face paper). These liners are the first defense against fire for the board, but are often made of paper or other highly combustible materials.

The present inventors have noted that it is the back liner, which closes the wall cavity, that more substantially impacts the fire endurance of the plasterboard to slow the spread of fire. For example, during a fire, the wall cavity temperature of the structure on fire will increase and can exceed a back paper combustion temperature. At this temperature, the back paper will release heat and have a negative impact on the endurance performance of the plasterboard. Furthermore, the quick combustion of the back paper decreases the time for the board to fail, thus leading to a more rapid spread of fire. The present inventors have found that the front paper, in contrast, has much less an impact on fire performance; while it may burn quickly, it is not as important in contributing to cause of fire spread.

As such, one aspect of the present disclosure provides a plasterboard having a first surface and an opposed second surface, a first liner disposed at the first surface, and a second liner disposed at the second surface. The plasterboard according to this aspect comprises a body of hardened plaster material extending from the first surface of the plasterboard to the second surface of the plasterboard; a first liner having a mass loss of at least 70 g/m² at 600 °C disposed at the first surface of the plasterboard; and a second liner having a mass loss of no more than 60 g/m² at 600 °C disposed at the second surface of the plasterboard.

The mass loss, in g/m², as used herein is measured by thermogravimetric analysis (TGA) at a rate of 5°C/min under ambient pressure, in contact with air. The mass loss at 600 °C is the total mass loss over the range 25-600 °C. The person of ordinary skill in the art will determine an appropriate instrument for conducting this measurement. As would be understood by the person of ordinary skill in the art, the mass loss provides insight into the thermal decomposition of the material. As described above, in various aspects of the disclosure, the first liner has a mass loss of at least 70 g/m² at 600 °C. For example, in various embodiments, the first liner has a mass loss of at least 80 g/m² at 600 °C, e.g., at least 90 g/m². In various embodiments, the first liner has a mass loss of at least 100 g/m², e.g., at least 105 g/m² at 600 °C or at least 110 g/m² at 600 °C. In some embodiments as described herein, the first liner has a mass loss of at least 115 g/m² at 600 °C, at least 120 g/m² at 600 °C, or at least 140 g/m² at 600 °C, or at least 160 g/m² at 600 °C. In various embodiments as described herein, the first liner has a mass loss of no more than 90% of the first liner mass, e.g., no more than 80%; the person of ordinary skill in the art will appreciate that this value will depend on a variety of factors, e.g., the amount of inorganic filler or pigment in the first liner. The present inventors have determined that use of a liner with a higher mass loss as the first liner (e.g., to be positioned facing away from a wall cavity and toward a room) does not cause significant issues with overall fire resistance -- and can, importantly, allow for a variety of paper and polymeric materials to be used as the first liner, which can provide a variety of desirable overall properties including a smooth surface for finishing of a wall.

In contrast, in this aspect of the disclosure the second liner has lower mass loss at 600 °C than does the first liner. Advantageously, the present inventors have found that such a second liner can provide improved fire-resistance to the plasterboards they are disposed on, e.g., when the second liner faces a wall cavity. As described above, in this aspect of the disclosure the second liner has a mass loss of no more than 60 g/m² at 600 °C. For example, in some embodiments as described herein, the second liner has a mass loss of no more than 50 g/m² at 600 °C, e.g., no more than 45 g/m² at 600 °C, or no more than 40 g/m² at 600 °C. For example, in some embodiments, the second liner has a mass loss of no more than 35 g/m² at 600 °C, e.g., no more than 30 g/m² at 600 °C. In some embodiments as described herein, the second liner has a mass loss of at least 15 g/m² at 600 °C, at least 18 g/m² at 600 °C, or at least 20 g/m² at 600 °C. In some embodiments as described herein, the second liner has a mass loss in the range of 15 to 60 g/m² at 600 °C. For example, in various embodiments as described herein, the second liner has a mass loss at 600 °C in the range of 15 to 50 g/m², or 15 to 45 g/m², or 15 to 40 g/m², or 15 to 35 g/m², or 15 to 30 g/m², or 18 to 60 g/m², or 18 to 50 g/m², or 18 to 45 g/m², or 18 to 40 g/m², or 18 to 35 g/m², or 18 to 30 g/m², or 20 to 60 g/m², or 20 to 50 g/m², or 20 to 45 g/m², or 20 to 40 g/m², or 20 to 35 g/m², or 20 to 30 g/m².

As described throughout the disclosure, the present inventors have found that using a second liner with a low mass loss (e.g., and positioning it toward a wall cavity) greatly improves the fire resistance and fire endurance of plasterboards. This is true even when the first liner exhibits a high mass loss. In particular embodiments as described herein, the present inventors have found that by using the second liner as the "back liner" (i.e., facing a wall cavity) enough fire resistance improvement is observed that a conventional front liner (e.g., of paper) can be used. The front liner is the consumer-facing side of the board and it is expected to have a particular aesthetic appearance. By only using the second liner on the back face of the board, the boards have improved fire resistance while meeting the aesthetic requirements for the consumer-facing side of the board.

Another aspect of the disclosure is plasterboard (e.g., having the mass loss values described above) having a first surface and an opposed second surface, the plasterboard comprising: a body of hardened plaster material extending from the first surface of the plasterboard to the second surface of the plasterboard; a first liner disposed at the first surface of the plasterboard, the first paper liner having a heat release of at least 600 kJ/m²; and a second liner disposed at the second surface of the plasterboard, the second liner having a heat release of no more than 500 kJ/m². Related to the mass loss as described above, the liners can also be characterized by the amount of heat released by the liners at elevated temperatures. To determine the amount of heat released, differential scanning calorimetry (DSC) can be used to measure the heat released by the liner during heating. The heat release is determined by DSC, at a heating rate of 5 °C/min up to 700 °C, with the heat release being determined over the range of 150-600 °C. Here, too, the measurement is performed at ambient pressure in the presence of air. The person of ordinary skill in the art can determine an appropriate instrument for use, and can perform this measurement together with the TGA measurement described above. Like the case for the mass loss as described above, in this aspect of the disclosure the first liners exhibit a relatively high heat release, while the second liners exhibit a relatively low heat release.

In various embodiments as described herein, the first liner has a heat release per area of at least 650 kJ/m², e.g., at least 800 kJ/m², or at least 900 kJ/m². In various embodiments, the first liner has a heat release per area of at least 1000 kJ/m², e.g., at least 1050 kJ/m², or at least 1100 kJ/m². In various embodiments, the first liner has a heat release per area of at least 1150 kJ/m², e.g., at least 1250 kJ/m², or at least 1500 kJ/m². In various embodiments as described herein, the first liner has a heat release per area of no more than 5000 kJ/m², e.g., no more than 4000 kJ/m², or no more than 3000 kJ/m².

In various embodiments as described herein, the second liner has a heat release per area of no more than 450 kJ/m², e.g., no more than 400 kJ/m², or no more than 350 kJ/m², or no more than 300 kJ/m². For example, in some embodiments as described herein, the second liner has a heat release per area of no more than 250 kJ/m², no more than 200 kJ/m², or no more than 100 kJ/m². In some embodiments as described herein, the second liner has a heat release per area of at least 50 kJ/m², at least 60 kJ/m², or at least 75 kJ/m². In some embodiments as described herein, the second liner has a heat release per area in the range of 50 to 500 kJ/m². For example, in various embodiments, the second liner has a heat release per area in the range of 50 to 450 kJ/m², or 50 to 400 kJ/m², or 50 to 350 kJ/m², or 50 to 300 kJ/m², or 50 to 250 kJ/m², or 50 to 200 kJ/m², or 75 to 500 kJ/m², or 75 to 450 kJ/m², or 75 to 400 kJ/m², or 75 to 350 kJ/m², or 75 to 300 kJ/m², or 75 to 250 kJ/m², or 75 to 200 kJ/m².

The first and second liners as described herein may also be characterized by their surface roughness. Thus, in one aspect of the disclosure, a plasterboard has a first surface and an opposed second surface, and comprises a body of hardened plaster material extending from the first surface of the plasterboard to the second surface of the plasterboard; a first liner having a surface roughness (Rz) of no more than 40 microns disposed on the first surface of the plasterboard; and a second liner having a surface roughness (Rz) of at least 80 microns disposed on the second surface of the plasterboard. The present inventors have noted that the surface roughness of a first liner of a plasterboard can be important from the standpoint of provision of a smooth surface facing a room. But the present inventors have noted that, because it can be arranged to face a wall cavity, the surface roughness of the second liner is less important. Accordingly a much rougher second liner can be used. As used herein, surface roughness refers to an average R_{z} of the material, as measured by contact profilometry using a Surf test SJ-210 instrument.

In various embodiments as otherwise described herein, the first liner has a surface roughness (Rz) of no more than 35 microns, e.g., no more than 30 microns. For example, in various embodiments, the first liner has a surface roughness (Rz) in the range of 10-40 microns, e.g., 10-35 microns, or 10-30 microns, or 15-40 microns, or 15-35 microns, or 15-30 microns. In various embodiments as otherwise described herein, the second liner has a surface roughness (Rz) of at least 85 microns, e.g., at least 90 microns. For example, in various embodiments as otherwise described herein, the second liner has a surface roughness (Rz) in the range of 80-1000 microns, e.g., 80-750 microns, or 80-500 microns, or 85-1000 microns, or 85-750 microns, or 85-500 microns, or 90-1000 microns, or 90-750 microns, or 90-500 microns.

The present inventors have noted especially the differing desirable properties for two different sides of a plasterboard. As described above, it is desirable for the face of the plasterboard facing a room to have a smoother surface -- and fire performance is less critical for this face. In contrast, the face of the plasterboard facing a wall cavity desirably provides good fire performance, but has less of a requirement of smoothness. Accordingly, another aspect of the disclosure is a plasterboard (e.g., as described any aspect or embodiment herein) having a first surface and an opposed second surface, the plasterboard comprising: a body of hardened plaster material extending from the first surface of the plasterboard to the second surface of the plasterboard; a first liner having a surface roughness (Rz) of no more than 40 microns disposed at the first surface of the plasterboard; and a second liner disposed at the second surface of the plasterboard, the second liner having a mass loss of no more than of no more than 60 g/m² at 600 °C and/or a heat release of no more than 400 kJ/m².

Based on the disclosure herein, the person of ordinary skill in the art can select appropriate materials for the first and second liners.

The first liner can be selected, e.g., to provide one or more of a relatively high mass loss, a relatively high heat release, and a relatively high smoothness, as described above. In various embodiments as otherwise described herein, the first liner is a paper liner. The identity of the paper liner is not particularly limited and the person of ordinary skill in the art can select an appropriate paper for use as a plasterboard liner. As the person of ordinary skill in the art will appreciate, papers used as liners can contain recycled content or be virgin papers, and can include fillers and/or reinforcement such as fibers and inorganic particulates. Paper liners can be treated in a variety of manners, e.g., by bleaching, or by surface treatment or coating (such as a polymer coating). In various embodiments as described herein, the paper liner can appear to be relatively light in color to an observer. For example, in various embodiments, the paper liner has, as measured in the CIELAB color space, an L* value of at least 70, an a* value of no more than 5 and a b* value of no more than 5. In various embodiments, the paper liner can be a so-called "ivory paper" liner. Paper liners can be provided with a desirably high degree of smoothness to a room-facing surface of the plasterboard, as the person of ordinary skill in the art will appreciate.

Of course, in various embodiments, other materials can be used as the first liner. In various embodiments, a polymer film can be used as the first liner. In various embodiments, a glass mat can be used as the first liner; such a glass mat can be, e.g., provided with a coating of a particulate inorganic material (e.g., calcium carbonate) bound with a polymer to provide a relatively smooth surface as described above. The person of ordinary skill in the art can select polymer- or glass mat-based liners to provide desired properties to the first liner as described herein. For example, a polymer or coating on a glass mat can provide a desirable smoothness to a room-facing surface of a plasterboard.

The second liner can be selected, e.g., to provide one or more of a relatively low mass loss, a relatively low heat release, and a relatively low smoothness, as described above.

In various embodiments as otherwise described herein, the second liner is a glass mat. In some embodiments, the glass mat second liner is an uncoated glass mat. In other embodiments, the glass mat second liner is a coated glass mat, e.g., provided with a coating of a particulate inorganic material (e.g., calcium carbonate) bound with a polymer to provide a relatively smooth surface as described above. The person of ordinary skill in the art can select glass mat-based liners to provide desired properties to the first liner as described herein. For example, glass mat liners with low organic content can provide low mass loss and/or low heat release.

Accordingly, in another aspect, the present disclosure provides a plasterboard having a first surface and an opposed second surface, the plasterboard comprising: a body of hardened plaster material extending from the first surface of the plasterboard to the second surface of the plasterboard; a first liner that is a paper liner disposed at the first surface of the plasterboard; and a second liner disposed at the second surface of the plasterboard, the second liner being a glass mat comprising glass fibers bound by one or more polymer binders.

As described above, in some embodiments as otherwise described herein, one or more of the first liner and the second liner is a glass mat. As would be understood by the person of ordinary skill in the art, a glass mat is a mat comprising glass fibers bound by one or more binders. In various embodiments, especially when used as a second liner, glass mats can be uncoated. And in various embodiments, glass mats can be coated. Coated glass mats can have a coating on one or more sides thereof, desirably on one side and not the other, with the uncoated side facing the body of hardened plaster. A variety of coatings can be used. For example, in various embodiments, the coating comprises a particulate inorganic material (e.g., calcium carbonate) bound by a polymeric binder. The polymer binders (i.e., binding the glass fibers of the mat and/or binding the particles of the coating) are not particularly limited. In some embodiments, each of the one or more polymer binders is a urea-based resin, an acrylic, or a modified phenolic resin. Other coating materials can be used on the glass mat, e.g., a polymer coating. The person of ordinary skill in the art can select a content of organic material (binder(s) and/or polymer coatings) to provide a glass mat with desirable properties, such as a desirable low mass loss at 600 °C and/or a low heat release.

The areal mass of the liners described herein can vary depending on the materials of the liners as described herein. As would be understood by the skilled person, areal mass refers to the mass per unit area. In some embodiments as described herein, the first liner has an areal mass in the range of 125-350 g/m². For example, in various embodiments, the first liner has an areal mass in the range of 125-300 g/m², or 125-250 g/m², or 175-350 g/m², or 175-300 g/m², or 175-2500 g/m², or 200-350 g/m², or 200-300 g/m², or 200-250 g/m². In various embodiments, e.g., when the second liner is an uncoated glass mat, the second liner has an areal mass of no more than 150 g/m², e.g., no more than 125 g/m², or no more than 100 g/m². In some embodiments, the second liner has an areal mass in the range of 50-150 g/m². For example, in some embodiments, the second liner has an areal mass in the range of 50-125 g/m², or 50-100 g/m², or 65-150 g/m², or 65-125 g/m², or 65-100 g/m², or 80-150 g/m², or 80-125 g/m², or 80-100 g/m². Of course, in various embodiments, e.g., when a coated glass mat is used as the second liner, the second liner can have a higher areal mass.

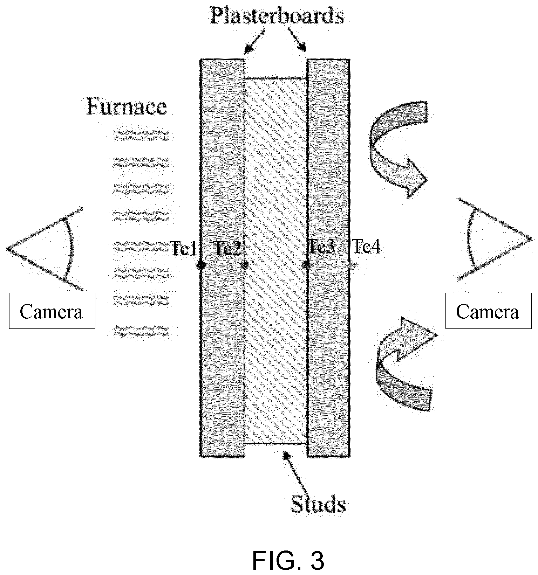

As described in more detail in the Examples below, the fire performance of the plasterboards as described herein may be evaluated using a small-scale partition test. The small-scale partition test evaluates the thermal insulation of a small partition considering thermal conductivity, cavity radiation, board endotherm, and exothermic reactions. For the test, a partition of 145x195 mm is built with metallic studs and placed as an electrical kiln door. The furnace temperature follows the quasi-ISO 834 curve. Four thermocouples are placed on each board face. The criteria "time to reach 140 °C plus room temperature on the cold face" (i.e., TC4) is recorded for each test. A schematic representation of this test is shown in FIG. 3. In various embodiments as described herein, the plasterboard has a TC4 that is substantially longer than a TC4 of an otherwise identical board made with a paper back liner.

It can be desirable for the first liner and the second liner to have roughly similar water permeabilities, so that a board dries from both sides at roughly similar rates. Accordingly, in various embodiments, the second liner has an ASTM E-96 water permeability at 75% r.h. and 23 °C that is within 50% of an ASTM E-96 water permeability at 75% r.h. and 23 °C of the first liner, e.g., within 20%. Of course, in other embodiments there may be a larger discrepancy between water permeabilities of the liners; in such cases, the person of ordinary skill in the art can adapt the board fabrication process accordingly.

The plasterboards as described herein include a body of hardened plaster material. The person of ordinary skill in the art will appreciate that the liners as described herein can be used with a variety of different types of plaster material. In some embodiments as described herein, the plaster material is a gypsum material. For example, in some embodiments, the plaster material comprises at least 75 wt% gypsum, at least 80 wt% gypsum, or at least 85 wt% gypsum. In some embodiments as described herein, the plaster material comprises a base material that is lime or a cement. For example, in some embodiments, the plaster material comprises at least 75 wt% lime, at least 80 wt% lime, or at least 85 wt% lime. In other embodiments, the plaster material comprises at least 75 wt% cement, at least 80 wt% cement, or at least 85 wt% cement.

In some embodiments as described herein, the plaster material further comprises one or more of accelerators, fluidizers, retarders, dispersants, foaming agents, and glass fibers. In some embodiments as described herein, the plaster material further comprises a silicone oil.

In some embodiments as described herein, the plasterboard has a thickness that is substantially equal to 0.375 inches between the first surface and the second surface. In some embodiments, the plasterboard has a thickness that is substantially equal to 0.5 inches between the first surface and the second surface; in some embodiments, the plasterboard has a thickness that is substantially equal to 0.625 inches between the first and the second surface. In some embodiments as described, the plasterboard has a thickness that is greater than 0.25 inches and no more than 2 inches (e.g., in the range of 0.25-0.75 inches, of 0.25-0.625 inches) between the first surface and the second surface.

In some embodiments as described herein, the plasterboard has a fire resistance that exceeds the 1 hour target set forth in the ANSI/UL 263 testing criteria.

In some embodiments as described herein, the plasterboard has a density in the range of 1700 to 2500 Ibs/MSF (i.e., 1 MSF = 1000 square feet).

Another aspect of the present disclosure provides a method of forming a plasterboard as described herein having a first surface and an opposed second surface. The method includes providing a slurry comprising a plaster precursor and water; disposing the slurry between a first liner and a second liner; allowing the slurry to set to form a wet plaster core; and drying the wet plaster core at a temperature in the range of 50-350 °C to provide the hardened plaster material; wherein the hardened plaster material is disposed between a first liner at the first surface of the building board and a second liner at the second surface of the building board.

As described above, the method of the present disclosure includes providing a slurry that comprises plaster precursor and water. In some embodiments, the plaster precursor comprises a base material selected from stucco, lime, or cement. In some embodiments as described herein, the plaster precursor comprises a base material that is a stucco material. As is known in the art, stucco can have a variety of compositions depending on the source and application at hand. As used herein, a "stucco" is a material having at least 75 wt% of calcium sulfate hemihydrate. It is typically provided by calcining a gypsum material to convert the gypsum (i.e., calcium sulfate dihydrate) to the corresponding hemihydrate. Real-world samples of stucco typically include, together with the hemihydrate (e.g., present as α-calcium sulfate hemihydrate, β-calcium sulfate hemihydrate, or combinations thereof), one or more of calcium sulfate dihydrate, calcium sulfate anhydrate, and inert calcium sulfate. In some embodiments, the stucco is desirably present in the slurry to provide the hardened plaster material of the core with at least 75 wt% gypsum, e.g., at least 80 wt% gypsum, or at least 85 wt% gypsum. In alternative embodiments as described herein, the plaster precursor comprises a base material that is lime or a cement. For example, in some embodiments, the lime is desirably present in the slurry to provide the hardened plaster material of the core with at least 75 wt% lime, e.g., at least 80 wt% lime, or at least 85 wt% lime. For example, in some embodiments, the cement is desirably present in the slurry to provide the hardened plaster material of the core with at least 75 wt% cement, e.g., at least 80 wt% cement, or at least 85 wt% cement.

As the person of ordinary skill in the art will appreciate, the water provides fluidity to the slurry for ease of handling, as well as provides the necessary water for hydration of the base material. The person of ordinary skill in the art will select a desirable ratio of plaster precursor to water. In various embodiments of the present disclosure, the weight ratio of plaster precursor to water in the slurry is no more than 3:1, or no more than 5:2, or no more than 2:1, or no more than 7:4, or no more than 3:2. For example, in various embodiments, the weight ratio of plaster precursor to water is in the range of 3:1 to 1:2, or 2:1 to 4:7, or 3:1 to 2:3, or 3:1 to 1:1, or 5:2 to 1:2, or 5:2 to 4:7, or 5:2 to 2:3, or 5:2 to 1:1, or 2:1 to 1:2, or 2:1 to 4:7, or 2:1 to 2:3, or 2:1 to 1:1, or 7:4 to 1:2, or 7:4 to 4:7, or 7:4 to 2:3, or 7:1 to 1:1, or 3:2 to 1:2, or 3:2 to 4:7, or 3:2 to 2:3, or 3:2 to 1:1.

While not discussed in detail here, other additives may be present in the slurry. For example, one or more accelerators, fluidizers, retarders, dispersants, foaming agents, glass fibers, and/or silicone oil maybe be present in the slurry.

The person of ordinary skill in the art can use conventional methods to form the slurry into a board. For example, the slurry can be dispensed between opposing liners, allowed to set, then dried. In some embodiments, drying occurs at a temperature in the range of 50-350 °C to provide the hardened plaster material. In some embodiments of the present disclosure as described herein, drying occurs at a temperature in the range of 50-325 °C or 50-300 °C (i.e., measured in the environment above the board during drying, e.g., in a drying oven). For example, in various embodiments, drying occurs at a temperature in the range of 100-350 °C, or 100-325 °C , or 100-300 °C, or 150-350 °C, or 150-325 °C , or 150-300 °C, or 200-350 °C, or 200-325 °C , or 200-300 °C. Drying may be accomplished with an oven, wherein the oven temperature is in the range of 50-350 °C, or 50-325 °C, or 50-300°C, or 100-350 °C, or 100-325 °C, or 100-300 °C, or 150-350 °C, or 150-325 °C, or 150-300 °C, or 200-350 °C, or 200-325 °C, or 200-300 °C. In various embodiments, during the drying step, the temperature of the plaster core does not exceed 125 °C, e.g., does not exceed 120 °C, 115 °C, 110 °C, or 105 °C.

Even if the board made by the methods described herein does not meet all the limitations of the boards as described above, the methods described herein can be advantaged by many of the particular parameters described above.

Another aspect of the present disclosure provides a building comprising an interior space that is bounded by a plasterboard as described herein, wherein the first liner faces toward the interior space and the second liner faces away from the interior space. For example, in some embodiments, the building comprises one or more framing members, wherein the plasterboard is attached to the one or more framing members with the second liner facing toward the framing members and the first liner facing away from the one or more framing members. The framing members are not particularly limited. For example, the one or more framing members may be selected from studs, joists, sills, headers, rafters, or combinations thereof.

Another aspect of the present disclosure provides a wall cavity comprising a space and one or more framing members, wherein the space is bounded by a plasterboard as described herein, wherein the first liner faces away from the space and the second liner faces towards the space, and wherein the plasterboard is attached to the one or more framing members with the second liner facing towards the framing members and the first liner facing away from one or more framing members. For example, the one or more framing members may be selected from studs, joists, sills, headers, rafters, or combinations thereof. The framing members can be of one or more materials. For example, the one or more framing members may be made from wood, metal, steel, aluminum, plastic or a combination of these materials. In some embodiments as described herein, the space of the wall cavity has air therein. In some embodiments as described herein, the pace of the wall cavity comprises insulation. In some embodiments, the insulation can be a fibrous material, such as glass wool insulation, or stonewool insulation, or mineral wool insulation or polyester insulation. In some embodiments, the insulation can be a plant based material, such as a cellulose, flax or hemp materials. In some embodiments, the insulation can be an organic material such as cotton or wool. In some embodiments, the insulation can be a foam material, such as a polyurethane foam, an isocyanurate foam, a rubber, or an expanded polystyrene foam. In some embodiments, the insulation comprises a combination of more than one insulating material or form. In some embodiments, the insulation may have a facer material or an air or moisture barrier material applied to one or more faces of the insulation. In some embodiments, the facer or air or moisture barrier materials comprise a paper, a foil, a polymer, a reinforcement, a scrim, or a combination of such materials.

The person of ordinary skill in the art will provide the materials and perform the processes described herein based on the general disclosure above, and with reference to the Examples below.

### EXAMPLES

The Examples that follow are illustrative of specific embodiments of the products of the disclosure, and various uses thereof. They are set forth for explanatory purposes only, and are not to be taken as limiting the scope of the disclosure.

### Example 1. Description of Mats

Different mats were selected to be used as the back liner (i.e., facing the cavity) of a gypsum board. Table 1 describes these mats; diameter and length are average lengths of the fibers of the glass mats.

**Table 1.**

| Liner No. | Description | Name | Binder | Areal mass |
|---|---|---|---|---|
| A | Conventional grey paper (US) | - | - | 185 g/m² |
| | | | | 38 Ibs/MSF |
| B | Conventional grey paper (EU) | - | - | 140 g/m² |
| | | | | 28 Ibs/MSF |
| 1 | Non-coated glass mat | Adfors U85 | Urea | 85 g/m² |
| | | | | 17 Ibs/MSF |
| 2 | Non-coated glass mat | Adfors UM85 | Urea | 85 g/m² |
| | | | | 17 Ibs/MSF |
| 3 | Coated glass mat | Adfors KG40 TM (U85/1-H2N) | Urea | 350 g/m² |
| | | | | 71 Ibs/MSF |
| 4 | Coated glass mat | OC VL 3597 | Urea | 330 g/m² |
| | | | | 72 Ibs/MSF |
| 5 | Coated glass mat | OC KR 11 | Acrylic | 100 g/m² |
| | | | | 20 Ibs/MSF |

| | | | | |
|---|---|---|---|---|
| *Not measured | | | | |

### Example 2. Shrinkage Tests

The liners of Example 1 were used to produce gypsum boards, where the identified liners are present on the back (i.e., "second") face of the gypsum board. Conventional paper liners were used on the front (i.e., "first") face of the gypsum board. The boards were subjected to a free shrinkage test. The free shrinkage test evaluates the decrease of the board width as a function of temperature and helps evaluate the possibility for joint opening during fire. To measure the dimensions of the board, a linear variable differential transformer (LVDT) follows the board top.

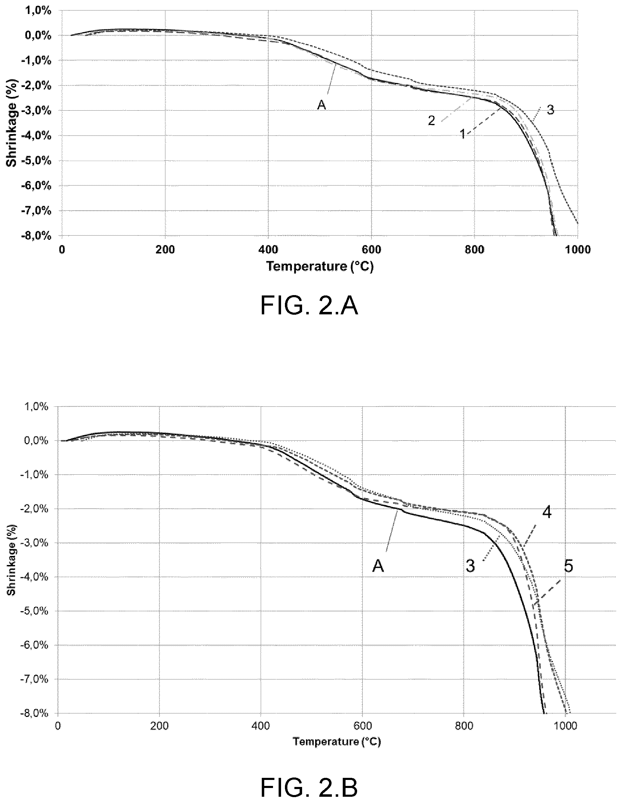

FIG. 2A reports the results of this shrinkage test for boards with liners A and 1-3 and FIG. 2B reports the results of the shrinkage test for board with liners A and 3-5. No difference in shrinkage was observed between the paper and non-coated mats, while the coated mats exhibited slightly better performance, corresponding to around a one minute gain in fire performance under this measure.

### Example 3. Small-scale Partition Test

The mats of Example 1 were used to produce gypsum boards, where the liners under test are present on the back face of the gypsum board. Conventional paper liners were used on the front face of the gypsum board. The boards were then subjected to a small-scale partition test. The small-scale partition test evaluates the thermal insulation of a small partition considering thermal conductivity, cavity radiation, board endotherm, and exothermic reactions. For the test, a partition of 145x195 mm is built with metallic studs (48 mm, U-shaped) sandwiched between plasterboards (with the paper liner of the "first"/"front" surfaces facing away from the studs and the test liner of the "second"/"back" surfaces facing toward the studs. The partition is placed against the opening of an electrical kiln (i.e., as a "door"). The furnace temperature follows the quasi-ISO 834 curve. Four thermocouples are placed on the partition, one on each board face. The criteria "time to reach 140 °C in excess of room temperature on the cold face (i.e., on the face remote from the kiln) is the TC4 value. A schematic representation of this test is shown in FIG. 3.

The results of this testing are shown in Table 2.

**Table 2.**

| Board No. | Description of back face | Density (Ibs/MSF) | thickn's (mm) | TC4 (min) | norm. TCF (min·MSF/ m·lb) | Areal mass |
|---|---|---|---|---|---|---|
| A | Conventional grey paper (US) | 1887 | 16.10 | 67.3 | 2.21 | 185 g/m² |
| | | | | | | 38 Ibs/MSF |
| B | Conventional grey paper (EP) | 1957 | 15.86 | 71.9 | 2.32 | 140 g/m² |
| | | | | | | 28 Ibs/MSF |
| 1 | Non-coated glass mat | 1934 | 15.78 | 78.9 | 2.59 | 85 g/m² |
| | | | | | | 17 Ibs/MSF |
| 2 | Non-coated glass mat | 1917 | 15.75 | 77.6 | 2.57 | 85 g/m² |
| | | | | | | 17 Ibs/MSF |
| 3 | Coated glass mat | 1948 | 15.83 | 72.7 | 2.36 | 350 g/m² |
| | | | | | | 71 Ibs/MSF |
| 4 | Coated glass mat | 1854 | 15.95 | 73.5 | 2.48 | 330 g/m² |
| | | | | | | 72 Ibs/MSF |
| 5 | Coated glass mat | 1862 | 16.21 | 75 | 2.48 | 100 g/m² |
| | | | | | | 20 Ibs/MSF |

The "norm. TCF" is a value of TC4 that is normalized by the density of the board and the thickness of the board, in order to compensate for the fact that different boards had somewhat different masses of gypsum. From Table 2, it can be seen that the decrease of areal mass of the paper (US vs EU) leads to around a 4 minute improvement of the TC4 for the board. For board 3 with a coated mat, there is a 5 minute improvement over board A, similar to the TC4 of board B. Boards 4 and 5, with coated mats, also exhibit around a 5-6 minute improvement over board A. The best results are seen for the boards 1 and 2, both with uncoated glass mats, with 10-11 minute improvements. The uncoated glass mats have the lowest areal mass of all of the liners tested.

### Example 4. Thermogravimetric Analysis

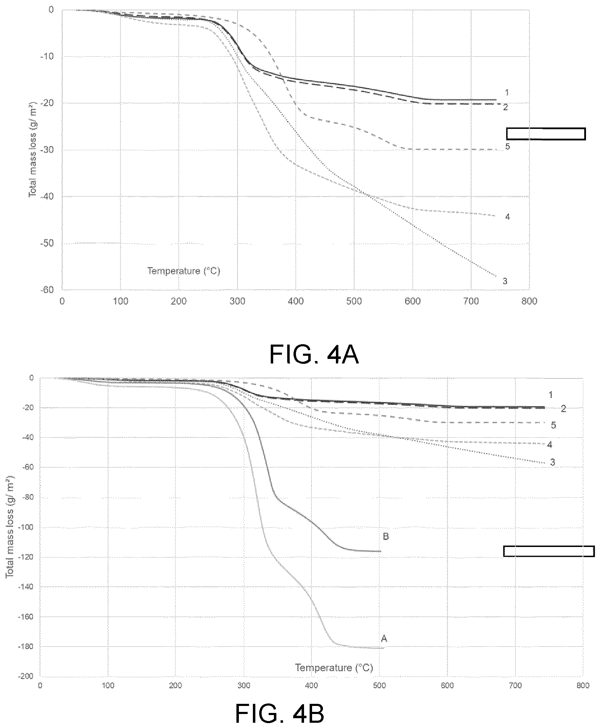

To further evaluate the liners of Example 1, thermogravimetric analysis (TGA) was performed at a temperature ramp of 10 °C/min. The results are plotted in FIG. 4A and 4B. FIG. 4A shows the mass loss of °Nos. 1-5 and FIG. 4B shows the mass loss for mat Nos. A, B, and 1-5.

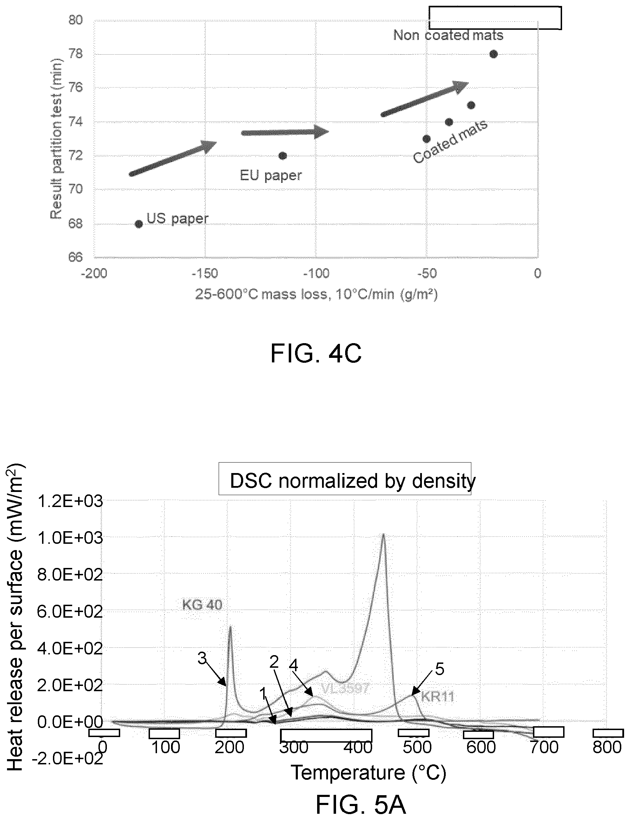

To further understand the TGA results, the mass loss over the range 25-600 C under a 10 °C/min ramp in air and the results of the partition test were plotted against each other. This plot is shown in FIG. 4C. From FIG. 4C, it can be seen that better partition test results are observed when the liner facing the cavity (i.e., the "second" liner) has a lower mass loss at 600 °C.

### Example 5. Combination Differential Scanning Calorimetry and Thermogravimetric analysis

To further evaluate the liners of Example 1, a combination TGA and differential scanning calorimetry (DSC) was performed, at a ramp of 5 °C/min up to 700 °C with air flushing. The heat released per unit area over the range 150-600 °C and the mass loss at 600 °C per unit area are shown in Table 3 and FIG 5A.

**Table 3.**

| Liner No. | Description | Heat Released (J/g) | Areal mass Density | Heat Released per Area (kJ/m²) | Mass loss 600°C (g/m²) (5 °C/min ramp) |
|---|---|---|---|---|---|
| A | Conventional grey paper (US) | 10065 | 185 g/m² | 1862 | 175 |
| | | | 38 Ibs/MSF | | |
| B | Conventional grey paper (EP) | 9594 | 140 g/m² | 1343 | 125 |
| | | | 28 Ibs/MSF | | |
| 1 | Non-coated glass mat | 914.6 | 85 g/m² | 77.7 | 19 |
| | | | 17 Ibs/MSF | | |
| 2 | Non-coated glass mat | 1396 | 85 g/m² | 118.7 | 22 |
| | | | 17 Ibs/MSF | | |
| 3 | Coated glass mat | 2584 | 350 g/m² | 905 | 55 |
| | | | 71 Ibs/MSF | | |
| 4 | Coated glass mat | 702.5 | 330 g/m² | 231.8 | 40 |
| | | | 72 Ibs/MSF | | |
| 5 | Coated glass mat | 2065 | 100 g/m² | 206.5 | 29 |
| | | | 20 Ibs/MSF | | |

From Table 3 and FIG. 5A, it can be seen that the paper has a much higher heat release than the mats tested. Interestingly, mat 4 and 5, that are both coated, have similar heat releases although they have a huge difference in areal mass. This is because the heat release per mass of mat 5 is much greater than that of mat 4.

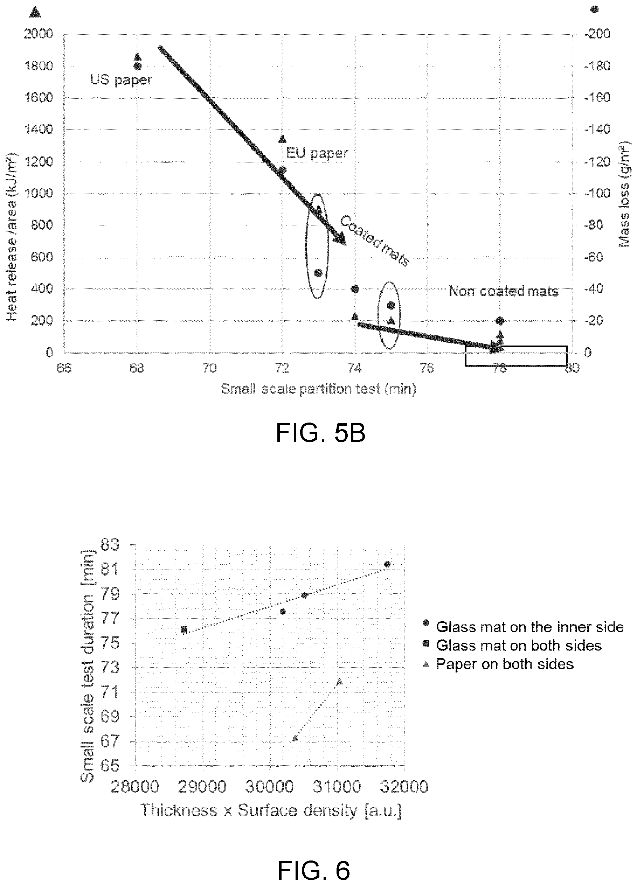

To further understand the DSC results, the heat release and the results of the partition test were plotted against each other in FIG. 5B. The results of the mass loss at 600 °C and the results of the partition test plotted in FIG. 4C are also plotted on FIG. 5B. From FIG. 5B, it can be seen that, as both heat release per area and mass loss decrease, the partition test results increase.

### Example 6. Comparison

Small-scale partition tests were performed as described above on analogous board samples: one with an uncoated glass mat on both sides, some with paper on both sides, and some with an uncoated glass mats on the side facing the cavity and a paper on the side facing away from the cavity. Partition test data are plotted vs. the thickness in mm and the board density in Ibs/MSF in FIG. 6.

Surprisingly, the data demonstrate that having paper on the board face facing the cavity had a much larger effect than did having paper on the board face facing away from the cavity. From these data, the inventors noted that fire performance can be greatly improved by, for example, using a glass mat on the board face facing toward the cavity, even though a paper liner is used on the board face facing away from the cavity. This allows for provision of boards with improved fire performance, while maintaining a desirably smooth surface by the use of a paper liner at the room-facing surface of the board.

Various embodiments and aspects of the disclosure are provided by the following enumerated embodiments, which may be combined in any number and in any combination not technically or logically inconsistent.

Embodiment 1. A plasterboard having a first surface and an opposed second surface, the plasterboard comprising:
a body of hardened plaster material extending from the first surface of the plasterboard to the second surface of the plasterboard;
a first liner having a mass loss of at least 70 g/m² at 600 °C disposed at the first surface of the plasterboard; and
a second liner having a mass loss of no more than 60 g/m² at 600 °C disposed at the second surface of the plasterboard.

Embodiment 2. A plasterboard (e.g., as described in embodiment 1) having a first surface and an opposed second surface, the plasterboard comprising:
a body of hardened plaster material extending from the first surface of the plasterboard to the second surface of the plasterboard;
a first liner disposed at the first surface of the plasterboard, the first paper liner having a heat release of at least 600 kJ/m²; and
a second liner disposed at the second surface of the plasterboard, the second liner having a heat release of no more than 500 kJ/m².

Embodiment 3. A plasterboard having a first surface and an opposed second surface, the plasterboard comprising:
a body of hardened plaster material extending from the first surface of the plasterboard to the second surface of the plasterboard;
a first liner having a surface roughness (Rz) of no more than 40 microns disposed on the first surface of the plasterboard; and
a second liner having a surface roughness (Rz) of at least 80 microns disposed on the second surface of the plasterboard.

Embodiment 4. A plasterboard (e.g., as described in any of embodiments 1-3) having a first surface and an opposed second surface, the plasterboard comprising:
a body of hardened plaster material extending from the first surface of the plasterboard to the second surface of the plasterboard;
a first liner having a surface roughness (Rz) of no more than 40 microns disposed at the first surface of the plasterboard; and
a second liner disposed at the second surface of the plasterboard, the second liner having a mass loss of no more than 60 g/m² at 600 °C and/or a heat release of no more than 400 kJ/m².

Embodiment 5. A plasterboard (e.g., as described in any of embodiments 1-4) having a first surface and an opposed second surface, the plasterboard comprising:
a body of hardened plaster material extending from the first surface of the plasterboard to the second surface of the plasterboard;
a first liner that is a paper liner disposed at the first surface of the plasterboard; and
a second liner disposed at the second surface of the plasterboard, the second liner being a glass mat (optionally a coated glass mat) comprising glass fibers bound by one or more polymer binders.

Embodiment 6. The plasterboard of embodiment 5, wherein the second liner has a heat release of no more than 500 kJ/m².

Embodiment 7. The plasterboard of embodiment 5 or embodiment 6, wherein the second liner has a mass loss of no more than 60 g/m² at 600 °C.

Embodiment 8. The plasterboard of any of embodiments 1-7, wherein the first liner has a mass loss of at least 80 g/m² at 600 °C (e.g., at least 90 g/m²).

Embodiment 9. The plasterboard of any of embodiments 1-7, wherein the first liner has a mass loss of at least 105 g/m² at 600 °C (e.g., at least 110 g/m²).

Embodiment 10. The plasterboard of any of embodiments 1-7, wherein the first liner has a mass loss of at least 115 g/m² at 600 °C (e.g., at least 120 g/m² or at least 140 g/m², or at least 160 140 g/m²).

Embodiment 11. The plasterboard of any of embodiments 1-10, wherein the first liner has a mass loss of no more than 90% of the first liner mass, e.g., no more than 80%.

Embodiment 12. The plasterboard of any of embodiments 1-11, wherein the second liner has a mass loss of no more than 50 g/m² at 600 °C (e.g., no more than 45 g/m², or no more than 40 g/m²).

Embodiment 13. The plasterboard of any of embodiments 1-11, wherein the second liner has a mass loss of no more than 35 g/m² at 600 °C (e.g., no more than 30 g/m²).

Embodiment 14. The plasterboard of any of embodiments 1-13, wherein the second liner has a mass loss of at least 15 g/m² at 600 °C (e.g., at least 18 g/m², or at least 20 g/m²).

Embodiment 15. The plasterboard of any of embodiments 1-14, wherein the first liner has a heat release per area of at least 650 kJ/m² at 600 °C, e.g., at least 800 kJ/m², or at least 900 kJ/m².

Embodiment 16. The plasterboard of any of embodiments 1-14, wherein the firs tliner has a heat release of at least 1000 kJ/m² at 600 °C, e.g., at least 1050 kJ/m², or at least 1100 kJ/m².

Embodiment 17. The plasterboard of any of embodiments 1-14, 1150 kJ/m² at 600 °C (e.g., at least 1250 kJ/m², or at least 1500 kJ/m²).

Embodiment 18. The plasterboard of any of embodiments 1-17, wherein the first liner has a heat release per area of no more than 5000 kJ/m², e.g., no more than 4000 kJ/m², or no more than 3000 kJ/m².

Embodiment 19. The plasterboard of any of embodiments 1-18, wherein the second liner has a heat release per area of no more than 450 kJ/m² (e.g., no more than 400 kJ/m², or no more than 350 kJ/m², or no more than 300 kJ/m²).

Embodiment 20. The plasterboard of any of embodiments 1-18, wherein the second liner has a heat release per area of no more than 250 kJ/m² (e.g., no more than 200 kJ/m², or no more than 100 kJ/m²).

Embodiment 21. The plasterboard of any of embodiments 1-20, wherein the second liner has a heat release per area of at least 50 kJ/m² (e.g., at least 60 kJ/m² or at least 75 kJ/m²).

Embodiment 22. The plasterboard of any of embodiments 1-20, wherein the second liner has a heat release per area in the range of 50 to 450 kJ/m², or 50 to 400 kJ/m², or 50 to 350 kJ/m², or 50 to 300 kJ/m², or 50 to 250 kJ/m², or 50 to 200 kJ/m², or 75 to 500 kJ/m², or 75 to 450 kJ/m², or 75 to 400 kJ/m², or 75 to 350 kJ/m², or 75 to 300 kJ/m², or 75 to 250 kJ/m², or 75 to 200 kJ/m².

Embodiment 23. The plasterboard of any of embodiments 1-22, wherein the first liner has a surface roughness (Rz) of no more than 35 microns, e.g., no more than 30 microns.

Embodiment 24. The plasterboard of any of embodiments 1-22, wherein the first liner has a surface roughness (Rz) in the range of 10-40 microns, e.g., 10-35 microns, or 10-30 microns, or 15-40 microns, or 15-35 microns, or 15-30 microns.

Embodiment 25. The plasterboard of any of embodiments 1-24, wherein the second liner has a surface roughness (Rz) of at least 85 microns, e.g., at least 90 microns.

Embodiment 26. The plasterboard of any of embodiments 1-24, wherein the second liner has a surface roughness (Rz) in the range of 80-1000 microns, e.g., 80-750 microns, or 80-500 microns, or 85-1000 microns, or 85-750 microns, or 85-500 microns, or 90-1000 microns, or 90-750 microns, or 90-500 microns.

Embodiment 27. The plasterboard of any of any of embodiments 1-26, wherein the first liner is a paper liner.

Embodiment 28. The plasterboard of embodiment 27, wherein the paper liner has, as measured in the CIELAB color space, an L* value of at least 70, an a* value of no more than 5 and a b* value of no more than 5.

Embodiment 29. The plasterboard of any of embodiments 1-4 and 8-26, wherein the first liner is a polymer film.

Embodiment 30. The plasterboard of any of embodiments 1-4 and 8-6 wherein the first liner is a glass mat (e.g., a coated glass mat).

Embodiment 31. The plasterboard of any of embodiments 1-30, wherein the second liner is a glass mat.

Embodiment 32. The plasterboard of embodiment 31, wherein the second liner is an uncoated glass mat.

Embodiment 33. The plasterboard of embodiment 31, wherein the second liner is a coated glass mat.

Embodiment 34. The plasterboard of embodiment 33, wherein the second liner has a coating that is a coating of a particulate inorganic material bound by a polymer binder.

Embodiment 35. The plasterboard of any of embodiments 1-34, wherein the first liner has an areal mass in the range of 125-350 g/m² (e.g., in the range of 125-300 g/m², or 125-250 g/m², or 175-350 g/m², or 175-300 g/m², or 175-2500 g/m², or 200-350 g/m², or 200-300 g/m², or 200-250 g/m²).

Embodiment 36. The plasterboard of any of embodiments 1-35, wherein the second liner has an areal mass of no more than 150 g/m² (e.g., no more than 125 g/m², or no more than 100 g/m²).

Embodiment 37. The plasterboard of any of embodiments 1-35, wherein the second liner has an areal mass in the range of 50-150 g/m² (e.g., in the range of 50-125 g/m², or 50-100 g/m², or 65-150 g/m², or 65-125 g/m², or 65-100 g/m², or 80-150 g/m², or 80-125 g/m², or 80-100 g/m²).

Embodiment 38. The plasterboard of any of embodiments 1-37, wherein the second liner has an ASTM E-96 water permeability at 75% r.h. and 23 °C that is within 50% of an ASTM E-96 water permeability at 75% r.h. and 23 °C of the first liner, e.g., within 20%. Embodiment 39. The plasterboard of any of embodiments 1-38, wherein the plaster material is a gypsum material, e.g., wherein the plaster material comprises at least 75 wt% gypsum, e.g., at least 80 wt% gypsum, or at least 85 wt% gypsum.

Embodiment 40. The plasterboard any of embodiments 1-38, wherein the plaster material comprises a base material that is lime or a cement.

Embodiment 41. The plasterboard of any of embodiments 1-40, wherein the plaster material further comprises one or more of accelerators, fluidizers, retarders, dispersants, foaming agents, and glass fibers.

Embodiment 42. The plasterboard of any of embodiments 1-41, wherein the plaster material further comprises a silicone oil.

Embodiment 43. The plasterboard of any of embodiments 1-42, wherein the plasterboard has a thickness that is substantially equal to 0.375 inches between the first surface and the second surface.

Embodiment 44. The plasterboard of any of embodiments 1-43, wherein the plasterboard has a thickness that is substantially equal to 0.5 inches between the first surface and the second surface.

Embodiment 45. The plasterboard of any of embodiments 1-44, wherein the plasterboard has a thickness that is greater than 0.25 inches and no more than 2 inches between the first surface and the second surface (e.g., in the range of 0.25-0.75 inches, or 0.25-0.5 inches).

Embodiment 46. The plasterboard of any of embodiments 1-45, wherein the plasterboard has a fire resistance that exceeds the 1 hour target set forth in the ANSI/UL 263 testing criteria.

Embodiment 47. The plasterboard of any of embodiments 1-46, wherein the plasterboard has a final dry density in the range of 1700 to 2500 Ibs/MSF .

Embodiment 48. A method of forming a plasterboard of any of embodiments 1-47 having a first surface and an opposed second surface, the method comprising:
providing a slurry comprising a plaster precursor and water;
disposing the slurry between a first liner and a second liner;
allowing the slurry to set to form a wet plaster core; and
drying the wet plaster core to provide the hardened plaster material;
wherein the hardened plaster material is disposed between a first liner at the first surface of the building board and a second liner at the second surface of the building board.

Embodiment 49. The method of embodiment 48, wherein the weight ratio of plaster precursor to water is no more than 2:1 (e.g., no more than 7:4, or no more than 3:2).

Embodiment 50. The method of embodiment 48, wherein the weight ratio of plaster precursor to water is in the range of 2:1 to 1:2 (e.g., in the range of 2:1 to 4:7 , or 2:1 to 2:3, or 2:1 to 1:1, or 7:4 to 1:2, or 7:4 to 4:7, or 7:4 to 2:3, or 7:1 to 1:1, or 3:2 to 1:2, or 3:2 to 4:7, or 3:2 to 2:3, or 3:2 to 1:1).

Embodiment 51. The method of embodiment any of embodiments 48-50, wherein the plaster precursor comprises a base material that is a stucco material.

Embodiment52. The method of embodiment 51, wherein stucco is present in the slurry to provide the hardened plaster material with at least 75 wt. % gypsum, e.g., at least 80 wt% gypsum or at least 85 wt% gypsum.

Embodiment 54. The method of embodiment of any of embodiments 48-50, wherein the plaster precursor comprises a base material that is lime or a cement.

Embodiment 54. The method of any of embodiments 48-54, wherein each of the first liner and second liner is as defined in any of embodiments 1-38.

Embodiment 55. The method of any of embodiments 48-54, wherein the plasterboard is as defined in any of embodiments 39-47.

Embodiment 56. The method of any of embodiments 48-55, wherein the drying occurs at a temperature in the range of 100-350 °C (e.g., in the range of 100-325 °C or 100-300 °C).

Embodiment 57. A building comprising an interior space that is bounded by a plasterboard according to any of embodiments 1-48, wherein the first liner faces toward the interior space and the second liner faces away from the interior space.

Embodiment 58. A building according to embodiment 56, wherein the building comprises one or more framing members (e.g., studs, joists, sills, headers, rafters), and wherein the plasterboard is attached to the one or more framing members with the second liner facing toward the framing members and the first liner facing away from the one or more framing members.

Embodiment 59. A wall cavity comprising a space and one or more framing members, wherein the space is bounded by a plasterboard according to any of embodiments 1-48, wherein the first liner faces away from the space and the second liner faces towards the space, and wherein the plasterboard is attached to the one or more framing members with the second liner facing towards the framing members and the first liner facing away from one or more framing members.

Embodiment 60. The wall cavity of embodiment 59, wherein the space has air therein.

Embodiment 61. The wall cavity of embodiment 59 or embodiment 60, wherein the space has insulation therein.

The particulars shown herein are by way of example and for purposes of illustrative discussion of the preferred embodiments of the present disclosure only and are presented in the cause of providing what is believed to be the most useful and readily understood description of the principles and conceptual aspects of various embodiments of the disclosure. In this regard, no attempt is made to show structural details of the disclosure in more detail than is necessary for the fundamental understanding of the disclosure, the description taken with the drawings and/or examples making apparent to those skilled in the art how the several forms of the disclosure may be embodied in practice. Thus, before the disclosed processes and devices are described, it is to be understood that the aspects described herein are not limited to specific embodiments, apparatuses, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the disclosure (especially in the context of the following claims) are to be construed to cover both the singular and the plural, unless otherwise indicated herein or clearly contradicted by context. Recitation of ranges of values herein is merely intended to serve as a shorthand method of referring individually to each separate value falling within the range. Unless otherwise indicated herein, each individual value is incorporated into the specification as if it were individually recited herein. It will be further understood that the endpoints of each of the ranges are significant both in relation to the other endpoint, and independently of the other endpoint.

All methods described herein can be performed in any suitable order of steps unless otherwise indicated herein or otherwise clearly contradicted by context. The use of any and all examples, or exemplary language (e.g., "such as") provided herein is intended merely to better illuminate the disclosure and does not pose a limitation on the scope of the disclosure otherwise claimed. No language in the specification should be construed as indicating any non-claimed element essential to the practice of the disclosure.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

Unless indicated to the contrary, the numerical parameters set forth in the specification and attached claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

Groupings of alternative elements or embodiments of the disclosure disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of this disclosure are described herein, including the best mode known to the inventors for carrying out the disclosure. Of course, variations on these described embodiments will become apparent to those of ordinary skill in the art upon reading the foregoing description. The inventor expects skilled artisans to employ such variations as appropriate, and the inventors intend for the disclosure to be practiced otherwise than specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

Furthermore, it is to be understood that the embodiments of the disclosure disclosed herein are illustrative of the principles of the present disclosure. Other modifications that may be employed are within the scope of the disclosure. Thus, by way of example, but not of limitation, alternative configurations of the present disclosure may be utilized in accordance with the teachings herein. Accordingly, the present disclosure is not limited to that precisely as shown and described.

## Claims

1. A plasterboard having a first surface and an opposed second surface, the plasterboard comprising:
a body of hardened plaster material extending from the first surface of the plasterboard to the second surface of the plasterboard;
a first liner having a surface roughness (Rz) of no more than 40 microns disposed at the first surface of the plasterboard; and
a second liner disposed at the second surface of the plasterboard, the second liner having a mass loss of no more than 60 g/m² at 600 °C and/or a heat release of no more than 400 kJ/m².

2. A plasterboard according to claim 1, wherein
the first liner has a mass loss of at least 70 g/m² (e.g., at least 100 g/m²) at 600 °C; and
the second liner has a mass loss of no more than 60 g/m² at 600 °C.

3. A plasterboard according to claim 1 or claim 2, wherein
the first liner has a heat release of at least 500 kJ/m²; and
the second liner has a heat release of no more than 400 kJ/m².

4. The plasterboard of any of claims 1-3, wherein the first liner has a mass loss of at least 115 g/m² at 600 °C.

5. The plasterboard of any of claims 1-4, wherein the second liner has a mass loss of no more than 50 g/m² at 600 °C.

6. The plasterboard of any of claims 1-5, wherein the first liner has a heat release per area of at least 1150 kJ/m².

7. The plasterboard of any of claims 1-6, wherein the first liner has a heat release per area of no more than 5000 kJ/m².

8. The plasterboard of any of claims 1-7, wherein the first liner has a surface roughness (Rz) of no more than 35 microns.

9. The plasterboard of any of claims 1-8, wherein the second liner has a surface roughness (Rz) of at least 80 microns.

10. The plasterboard of any of claims 1-9, wherein the first liner is a paper liner.

11. The plasterboard of any of claims 1-10, wherein the second liner is a glass mat, e.g., an uncoated glass mat.

12. The plasterboard of any of claims 1-11, wherein the plaster material is a gypsum material.

13. A building comprising an interior space that is bounded by a plasterboard according to any of claims 1-12, wherein the first liner faces toward the interior space and the second liner faces away from the interior space.

14. A building according to claim 13, wherein the building comprises one or more framing members (e.g., studs, joists, sills, headers, rafters), and wherein the plasterboard is attached to the one or more framing members with the second liner facing toward the framing members and the first liner facing away from the one or more framing members.

15. A wall cavity comprising a space and one or more framing members, wherein the space is bounded by a plasterboard according to any of claims 1-12, wherein the first liner faces away from the space and the second liner faces towards the space, and wherein the plasterboard is attached to the one or more framing members with the second liner facing towards the framing members and the first liner facing away from one or more framing members.
